# EUROPÄISCHE PATENTSCHRIFT

(11) **EP 1 184 760 B1**
(45) Veröffentlichungstag und Bekanntmachung des Hinweises auf die Patenterteilung: **17.12.2003**
(21) Anmeldenummer: 01120023.5
(22) Anmeldetag: 20.08.2001
(51) Int. Cl.: G05B 19/05

(54) **Verfahren zur Steuerung und/oder Regelung eines technischen Prozesses**
Method for commanding and or controlling a technical process
Procédé de commande et/ou de régulation d'un processus technique

(30) Priorität: 30.08.2000 DE 10042639
(43) Veröffentlichungstag der Anmeldung: 06.03.2002
(73) Patentinhaber: SIEMENS AKTIENGESELLSCHAFT, 80333 München (DE)
(72) Erfinder: Opaterny, Thilo, 90453 Nürnberg (DE); Pfahlmann, Lothar, 91083 Baiersdorf (DE)

(56) Entgegenhaltungen:
- EP-A- 0 499 695
- DE-A- 19 621 062
- US-A- 5 485 620

## Beschreibung

Die Erfindung betrifft ein Verfahren zur Steuerung und/oder Regelung eines technischen Prozesses, bei dem mittels einer in einer graphischen Programmiersprache, vorzugsweise Funktionsplan (FUP) und/oder Kontaktplan (KOP), erzeugten Programmlogik eine Sensorik und/oder Aktorik dieses technischen Prozesses derart geführt wird, dass zur Abarbeitung sich wiederholender Prozesssequenzen - bedarfsweise aufrufbare - Programmbausteine definierbar sind.

Ein derartiges Verfahren ist beispielsweise in Verbindung mit der SIMATIC-Steuerung und der hierzu entwickelten Software bekannt.

Dabei hat der Anwender die Möglichkeit, ein Automatisierungssystem mit der entsprechenden Sensorik und Aktorik über ein Anwenderprogramm anzusteuern. Die im Rahmen des Prozesses wiederkehrenden Teilaufgaben werden nach Möglichkeit innerhalb der Programmlogik in Form von Bausteinen angelegt. In graphischen Programmiersprachen bestehen diese Bausteine aus Netzwerken, die ihrerseits aus Operationen, die Operanden miteinander verknüpfen, bestehen. In den erwähnten graphischen Programmiersprachen KOP und FUP stellen diese Netzwerke logische Verknüpfungen dar. Die Bausteine sind durch entsprechende Schnittstellen miteinander verbunden.

Die Programmiersprache Funktionsplan (FUP) verwendet eine Darstellung des Programmnetzwerks in Form von verschalteten logischen Gattern, wie sie aus der Digitaltechnik bekannt sind. Dabei stellen die Eingänge des Automatisierungssystems die Eingänge der logischen Gatter und die Ausgänge des Automatisierungssystems die entsprechenden Ausgänge der logischen Gatter dar. In der graphischen Programmiersprache Kontaktplan (KOP) wird das Automatisierungssystem als eine Anordnung von Kontakten und Spulen verstanden. Die realen Eingänge des Automatisierungssystems werden in Form von Kontakten und die realen Ausgänge in Form von Spulen dargestellt.

Bei der Verwendung von Bausteinen ist zwischen Bausteinen mit und ohne "Gedächtnis" zu unterscheiden. Die Bausteine ohne "Gedächtnis" können auf alle globalen Speicherbereiche und auf einen lokalen Stackbereich zugreifen. Dabei legen die Funktionen ohne "Gedächtnis" auch die Zwischenergebnisse im Stack ab. Sobald der entsprechende Baustein durchlaufen ist, werden die jeweiligen Ausgabeparameter an den aufrufenden Baustein an die jeweils vorgegebenen Speicheradressen übermittelt. Anschließend wird der verwendete Stack wieder freigegeben. Spätestens zu diesem Zeitpunkt sind die von den jeweiligen Bausteinen "erarbeiteten" Zwischenergebnisse verloren.

Im Unterschied hierzu verwendet ein Baustein mit "Gedächtnis" einen zusätzlichen Datenbaustein. Dieser Datenbaustein bleibt auch nach dem Durchlaufen des Bausteins erhalten. Der Vorteil derartiger Bausteine besteht darin, dass einmal erarbeitete Zwischenergebnisse immer wieder verwendet werden können. Der Nachteil besteht in dem höheren Speicher und damit Platzbedarf des betreffenden Bausteins.

Die Verwendung entsprechender Bausteine ist in nahezu allen Programmiersprachen der Automatisierungstechnik bekannt. Innerhalb moderner Automatisierungssysteme können sogar Bausteine in unterschiedlichen Sprachen verfasst und durch die entsprechenden Compiler-Werkzeuge in geeigneter Form zusammengesetzt werden.

Der Vorteil der Verwendung derartiger Programmbausteine liegt auf der Hand. Die entsprechend gestalteten Programme werden übersichtlicher, kleiner und in jedem Falle wartungsfreundlicher. Die genannten Vorteile gehen nicht immer mit einem verbesserten Laufzeitverhalten der entsprechenden Programme einher. Jeder Bausteinaufruf setzt,die ordnungsgemäße Übergabe der Ein- und Ausgangsparameter voraus. Die Parameter müssen hierzu in aller Regel erst kopiert werden. Unter der Anzahl der eingesetzten Bausteine und insbesondere der Anzahl der hierdurch verursachten Bausteinaufrufe leidet demnach die Performance des Automatisierungssystems. Das zur Steuerung und/oder Regelung eines Automatisierungssystems eingesetzte Programm wird speicher- und laufzeitintensiver. Es wird zumeist unmittelbar bei Betrachtung des nach der Übersetzung entstehenden Programmcodes dadurch deutlich, dass die Verwendung sehr vieler Bausteine zu einem verlängerten Programmcode führt.

Aus der US 5,485,620 ist ein System bekannt, mit dem Programme zum Steuern und Regeln technischer Prozesse erstellt, editiert, überwacht und korrigiert werden können. Die Programmierung erfolgt graphisch in Form von Folgeplänen (SFC+).
Teile des Gesamtnetzwerkes können dabei als Makros definiert werden, die nur im Falle ihres Aufrufes interpretiert werden.

In der EP 0 499 695 A2 ist ein Programmierverfahren zum rechnergesteuerten internen elektrischen Verbinden eines umfeldprogrammierbaren Logikfeldes beschrieben.

DE 196 21 062 A1 offenbart ein Programmiergerät mit einem Software-Werkzeug zum Erstellen eines Steuerprogramms für ein Automatisierungsgerät.

Der Erfindung liegt die Aufgabe zugrunde, ein Verfahren zur Steuerung und/oder Regelung von technischen Prozessen zu schaffen, bei dem eine übersichtliche Programmierung nicht mit einem verschlechterten Laufzeitverhalten bzw. erhöhten Speicherplatzbedarf bezahlt werden muss.

Diese Aufgabe wird durch ein Verfahren gemäß den Merkmalen des Hauptanspruchs gelöst. Vorteilhafte Ausgestaltungen der erfindungsgemäßen Lösung ergeben sich gemäß den Merkmalen der nachfolgenden Ansprüche 2 bis 8. Eine vorteilhafte Verwendung des erfindungsgemäßen Systems ist gemäß Anspruch 9 gegeben.

Aus den textuellen Programmiersprachen ist es bekannt, das vorstehend erläuterte Problem im Wege von Makrobausteinen zu lösen. Dabei werden ausgewählte Programmstücke als Makro definiert. An den jeweiligen Verwendungsstellen des betreffenden Programmstücks wird das entsprechende Programmstück durch einen entsprechenden Makroaufruf ersetzt. Dies bedeutet, dass das Makro nicht an seiner Definitionsstelle sondern vielmehr an der Stelle seines Aufrufortes einen Programmcode erzeugt. Die Erzeugung des Codes erfolgt entweder in einem vorgeschalteten Präkompilierungsprozess oder in Verbindung mit modernen Compilern in einem einzigen Arbeitsschritt bei der Generierung des eigentlichen Codes.

Innerhalb von Makros können auch Platzhalter definiert werden. Dadurch, dass die Platzhalter faktisch die Funktion von Funktionsparametern annehmen, erreicht ein Makro ebenfalls die Funktionalität eines Bausteins, wobei einige Unterschiede zu beachten sind.

Im Rahmen der erfindungsgemäßen Lösung wird die von den textorientierten Programmiersprachen bekannte Technik der Makrobausteine auf graphische Programmiersprachen wie etwa KOP oder FUP ausgedehnt und hierdurch die Makrotechnik für Automatisierungsaufgaben eröffnet, die in der Regel besser mit graphischen Programmiersprachen zu beschreiben sind.

Hierzu wird eine in Form eines Netzwerks definierte Programmsequenz zunächst selektiert und dann als Makrobaustein definiert und anschließend lediglich an der oder den Aufrufstellen kompiliert.

Zu diesem Zweck kann das als Makrobaustein ausgewählte Teilnetzwerk in einem eigens dafür vorgesehenen Makroeditor bearbeitet werden.

Die Selektion eines Teilnetzwerkes führt zur Auftrennung von Strukturen des Gesamtnetzwerks, die im Rahmen der Erfindung als Makroschnittstelle behandelt werden und innerhalb des Makroeditors bearbeitbar sind.

Hierzu wird der Makroschnittstelle ein eigener Lokalspeicher zugewiesen, der bei jedem Aufruf des Makrobausteins mit aktiviert wird.

In vorteilhafter Ausgestaltung kann bei der Darstellung des Makrobausteins innerhalb des Makroeditors zwischen verschiedenen Programmiersprachen gewählt werden. Die Bearbeitung der Strukturen des Makrobausteins kann demnach in verschiedenen Sprachen erfolgen. Die Speicherung des Makrobausteins in einer bestimmten Programmiersprache hat auf die spätere Übersetzung des Makrobausteins keinen weiteren Einfluss.

Dadurch, dass innerhalb der Makrobausteine Programmsprünge mittels der Definition von Sprungzielbezeichnern möglich sind, kann die fehlende Programmiermöglichkeit von "if ...-then ..."-Beziehungen in textuellen Programmiersprachen auch innerhalb von graphischen Programmiersprachen und in diesem Falle auch innerhalb der Makrobausteine nachempfunden werden.

Dabei ist bei der Verwendung von Sprungzielbezeichnern innerhalb von Makrobausteinen zu beachten, dass diese in Verbindung mit einem Ersetzungstool arbeiten müssen, das nur und nur Sprünge zulässt, die innerhalb des Makrobausteins als solchen möglich sind. Der Ersetzungsmechanismus verhindert gleichermaßen etwaige Sprünge in den Makrobaustein hinein. Dies kann beispielsweise durch die Generierung entsprechender Fehlermeldungen bei der Definition der Sprungziele erreicht werden. Im Fall, dass ein zulässiger Sprungzielbezeichner also für einen Sprung innerhalb eines Makros definiert wird, wird dieser Sprungzielbezeichner durch einen relativen Sprung innerhalb des Makros ersetzt.

Die Anwendungspalette der erfindungsgemäßen Makrobausteine ist dadurch erweitert, dass innerhalb der Makrobausteine lokale und/oder globale Platzhalter eingesetzt werden können. Dabei versteht man unter lokalen Platzhaltern lediglich innerhalb des jeweiligen Makrobausteins gültige Platzhalter, wobei globale Platzhalter innerhalb des Gesamtprogramms Gültigkeit haben. Innerhalb des erfindungsgemäßen Verfahrens ist sichergestellt, dass bei den Makrobausteinen zwischen solchen Makrobausteinen unterschieden wird, die mit einer gegenüber der ausgewählten Struktur veränderten Schnittstelle und mit solchen Makrobausteinen, die gegenüber der ursprünglichen Struktur mit einer unveränderten Schnittstelle arbeiten. Die Verwendung von Makrobausteinen mit unveränderter Schnittstelle erfordert lediglich eine Übersetzung der Makrobausteine an der Aufrufstelle. Bei der Verwendung von Makrobausteinen mit veränderter Schnittstelle muss zunächst eine "Versorgung" dieser Schnittstellen erfolgen, also insbesondere eine eindeutige Belegung der Ein- und Ausgänge.

Anschließend ist wie bei den Makrobausteinen mit unveränderter Schnittstelle jeder das Makro aufrufende Baustein incl. der Makros zu übersetzen.

Die Makrobausteine können entweder vom jeweiligen Anwender oder vom Anbieter des Automatisierungssystems zur Erweiterung der jeweils eingesetzten Programmiersprache eingesetzt werden. Die Definition besonders vorteilhafter Makros eröffnet zusätzliche Elemente in der jeweiligen Programmiersprache wie etwa Funktionsplan (FUP), in Form zusätzlicher Gatter wie etwa ein Toggle-Flip-Flop.

Die Erfindung wird nachstehend anhand eines in der Zeichnung nur schematisch dargestellten Ausführungsbeispiels näher erläutert. Es zeigen:
- Figur 1: eine Programmlogik in Form eines Netzwerks einer graphischen Programmiersprache,
- Figur 2: ein als Programmsequenz ausgewähltes Teilnetzwerk des Netzwerkes nach Figur 1,
- Figur 3: das in einen Makrobaustein überführte Teilnetzwerk nach Figur 2 in der Ansicht eines Makroeditors,
- Figur 4: den Makrobaustein nach Figur 3 nach einer Überarbeitung,
- Figur 5: die in Figur 1 dargestellte Programmlogik unter Verwendung des nach den Figuren 2 bis 4 generierten Makrobausteins und
- Figur 6: den Makrobaustein nach Figur 4 in einer abermaligen Überarbeitung in der Ansicht des Makroeditors in einer anderen Programmiersprache.

In dem in der Zeichnung dargestellten Ausführungsbeispiel wird die Generierung eines Makrobausteins zur Realisierung eines Toggle-Flip-Flops (TFF) erläutert. Ein derartiges Toggle-Flip-Flop (TFF) steht in der hier eingesetzten Programmiersprache FUP nicht in Form eines Gatters zur Verfügung.

Das Toggle-Flip-Flop (TFF) könnte demnach als Baustein programmiert werden. Nachdem, wie oben erläutert, ein derartiger Bausteinaufruf zwar zu einer übersichtlichen Programmierung aber aufgrund der erforderlichen Parameterübergabe zu einem erhöhten Speicher- und Laufzeitbedarf führt, ist die erfindungsgemäße Programmiermöglichkeit eines entsprechenden Makros überlegen.

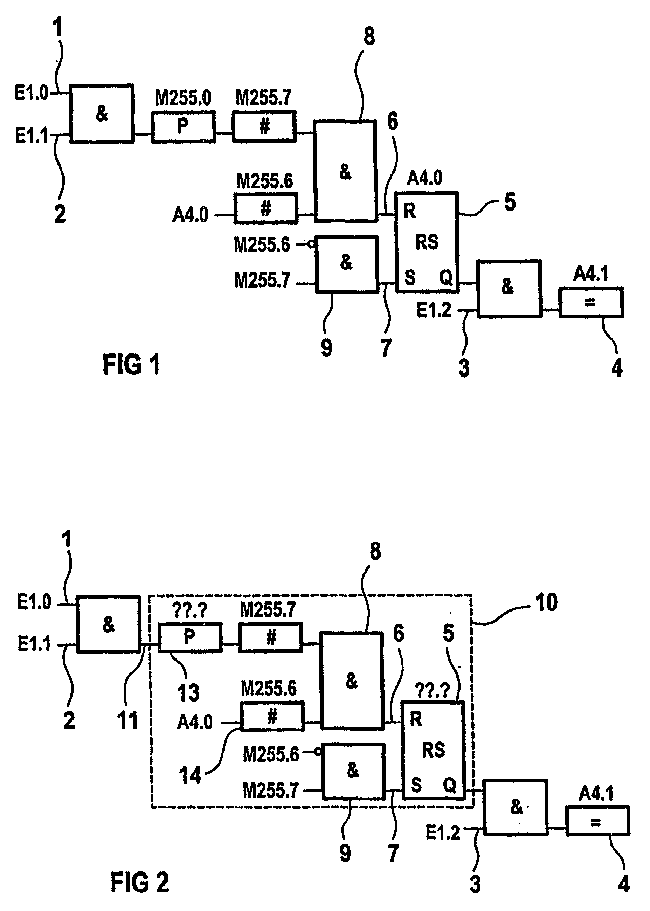

Figur 1 zeigt in der graphischen Programmiersprache FUP eine Gatterschaltung, wie sie im Rahmen der Entwicklung von Automatisierungssystemen zur Steuerung und/oder Regelung eines technischen Prozesses eingesetzt werden. Die Gatterschaltung weist drei Eingänge 1, 2 und 3 sowie einen Ausgang 4 auf. Zentrales Element der im Übrigen nicht weiter interessierenden Gatterschaltung ist ein RS-Flip-Flop 5 mit einem R- und einem S-Eingang 6 und 7. Ein RS-Flip-Flop ist ein bistabiles Element, das als Grundbaustein der Digitaltechnik aus zwei NOR-Verknüpfungen zusammengeschaltet ist.

Sowohl dem R-Eingang 6 als auch dem S-Eingang 7 des RS-Flip-Flops 5 ist jeweils ein UND-Gatter 8, 9 vorgeschaltet. Die Schaltung der UND-Gatter 8, 9 muss an dieser Stelle nicht weiter erläutert werden.

Das in Figur 2 gemäß der gestrichelten Linie selektierte Teilnetzwerk definiert ein so genanntes Toggle-Flip-Flop 10. Es handelt sich dabei um ein Flip-Flop, das bei jeder steigenden Flanke an seinem Eingang den Zustand wechselt. Es wird auch als Stromstoßrelais bezeichnet. Durch die gestrichelt dargestellte Linie ist die einem Toggle-Flip-Flop 10 entsprechende Gatterschaltung ausgewählt. Dabei haben sich die Eingänge 1 bis 3 sowie der Ausgang 4 des Gesamtnetzwerks nicht verändert.

Die in der Selektion vollständig, d. h. mit Ein- und Ausgängen, ausgewählten Elemente, die demnach in sich abgeschlossen sind, können innerhalb des Makros unverändert weiterverwendet werden. Es handelt sich hierbei insbesondere um die beiden UND-Gatter 8 und 9 des als Toggle-Flip-Flop 10 bezeichneten Makrobausteins. Die aus dem Selektionsbereich herausführenden Ein- und Ausgänge sowie die aufgrund der Selektion außerhalb des Makros beschalteten Operanden bilden eine Makroschnittstelle. Die Makroschnittstelle wird in dem hier vorliegenden Ausführungsbeispiel durch den Ausgang des RS-Flip-Flops 5 sowie den Eingang 11 einer Flankenerkennungsschaltung 13 definiert.

In dieser Darstellung sind die nicht beschalteten Operanden, also das RS-Flip-Flop 5 und die Flankenerkennungsschaltung 13, zu Ein-/Ausgangsparametern geworden. Dies wird gemäß Figur 2 durch die Fragezeichen über den entsprechenden Operanden vom Editor signalisiert, um die erforderliche Nachbearbeitung der genannten Operanden 5, 13 sicherzustellen.

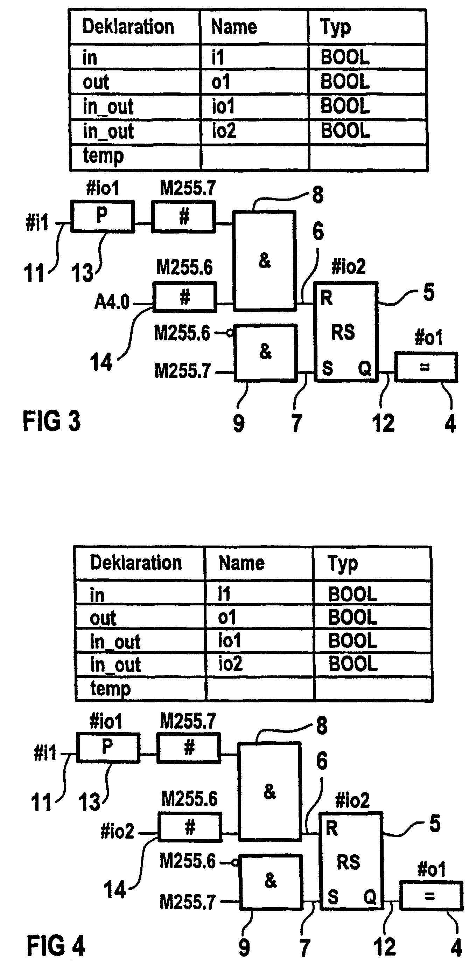

Nachdem somit gemäß Figur 2 ein Teilnetzwerk selektiert ist, kann ein Makroeditor gestartet werden, der zu der in Figur 3 gezeigten Darstellung führt.

Aus dem Eingang der Flankenerkennungschaltung 13 wurde ein Makroeingang 11 und aus dem unbeschalteten Ausgang des RS-Flip-Flops 5 der Makroausgang 12. Die Überführung von nicht beschalteten Operanden zu Ein-/Ausgangsparametern des Makrobausteins trifft im Falle von boolschen Operatoren nicht zwingend zu. So würde beispielsweise aus dem Dualausgang eines Zählergatters ein Ausgangsparameter vom Typ Word. Innerhalb des Makroeditors nach Figur 3 kann eine Bearbeitung des dargestellten Makrobausteins erfolgen und zum Teil notwendig sein. Die fest verdrahtete Beschaltung eines Zwischenspeichers 14 muss nun in ihrer Semantik dem übrigen Makrobaustein angepasst werden. Für den Fall, dass der Eingang des Zwischenspeichers 14 bereits vor Eröffnung des Makroeditors gelöscht worden wäre, wäre auch der Zwischenspeicher 14 als unbeschalteter Operand in die Schnittstelle des Makroeditors aufgenommen worden. Dies müsste nun durch Korrektur der Makroschnittstelle nachgebessert werden.

Nach der erwähnten Überarbeitung innerhalb des Makroeditors, also insbesondere der Änderung der Eingangsbeschaltung des Zwischenspeichers 14, entsteht ein verändertes Teilnetzwerk gemäß Figur 4. Dieses Netzwerk verkörpert nunmehr den gewünschten Makrobaustein Toggle-Flip-Flop 10. Der Makrobaustein kann mit einem Namen versehen werden und anstelle seiner Verwendung in Form eines geeigneten Makroaufrufs in der ursprünglichen Programmstruktur verankert werden.

Das bearbeitete Teilnetzwerk kann in Form dieser Makroaufrufe in übersichtlicher Form in der Programmstruktur eingearbeitet werden.

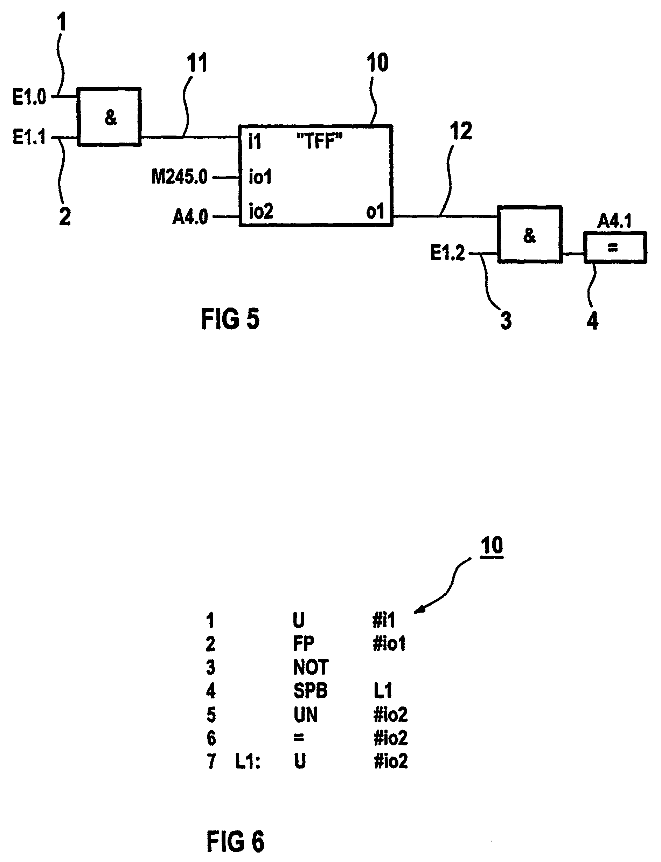

Die Einarbeitung des Makrobausteins TFF in dem ursprünglichen Gesamtnetzwerk ist in Figur 5 dargestellt.

Ein weiteres Leistungsmerkmal des erfindungsgemäßen Verfahrens ist der Umstand, dass innerhalb des Makroeditors mit verschiedenen Programmiersprachen gearbeitet werden kann.

Anstelle der bisherigen Darstellung der Programmiersprache Kontaktplan (KOP) kann statt dessen beispielsweise mit der in der SIMATIC-Umgebung eingesetzten Programmiersprache Anweisungsliste (AWL) gearbeitet werden. Eine entsprechende Darstellung des beispielhaft bearbeiteten Makrobausteins ist in Figur 6 gezeigt. Dabei ist die Flankenerkennung gemäß Zeile 1 und 2 unverändert geblieben. Anstelle der in der ursprünglichen Form vorgesehenen Zeile 5 und 6 mit dem Setzen und Rücksetzen eines zu speichernden Elementes erfolgt lediglich eine negierte Zuweisung auf den in dieser Darstellung mit io2 bezeichneten Ein-/Ausgang. Diese Zuweisung erspart die ansonsten erforderliche Zwischenspeicherung.

Das in AWL erstellte und veränderte Makro kann unbeschadet der in Figur 6 gezeigten Darstellung auch in den Programmiersprachen KOP oder FUP verwendet werden. Für den Fall, dass in der Bearbeitung Schnittstellen verändert werden, ist ein Schnittstellenabgleich an allen Verwendungsstellen des Makrobausteins erforderlich. Hierzu muss das gesamte Programm neu übersetzt werden.

Für den Fall, dass keine Schnittstellen verändert wurden, müssen lediglich die Makrobausteine als solche bzw. die die Makros verwendenden Bausteine neu übersetzt werden.

Anhand des vorstehenden Ausführungsbeispiels wird deutlich, dass die Definition von Makrobausteinen mittels eines geeigneten Makroeditors die übersichtliche Programmierung, wie sie ansonsten mittels Verwendung von Programmbausteinen möglich ist, leistet. Dabei werden durch die Makrotechnik die ansonsten speicher- und laufzeitintensiven Parameterübergaben erspart. Der Makroeditor erlaubt überdies die Bearbeitung der Makrobausteine in unterschiedlichen Programmiersprachen, ohne hierdurch deren Verwendung auf bestimmte Programmiersprachen zu beschränken.

Die hier nur beispielhafte Makrotechnik eröffnet demnach eine benutzerfreundlichere Programmiermöglichkeit und somit eine verbesserte Steuerung und Regelung technischer Prozesse mittels eines Automatisierungssystems.

## Patentansprüche

1. Verfahren zur Steuerung und/oder Regelung eines technischen Prozesses, bei dem mittels einer in einer graphischen Programmiersprache, vorzugsweise Funktionsplan (FUP) und/oder Kontaktplan (KOP), erzeugten Programmlogik eine Sensorik und/oder Aktorik dieses technischen Prozesses derart geführt wird, dass zur Abarbeitung sich wiederholender Prozesssequenzen bedarfsweise aufrufbare Programmbausteine definierbar sind, wobei hierzu folgende Schritte abgearbeitet werden:
- Selektion einer als Teilnetzwerk dargestellten Programmsequenz und
- Definition dieser Programmsequenz als Makrobaustein,
**dadurch gekennzeichnet,**
- **dass** nach der Selektion des Teilnetzwerks ein Makrobausteineditor zur Bearbeitung des Makrobausteins aufrufbar ist und
- **dass** der Makrobaustein im Falle der Verwendung nur an den jeweiligen Aufrufstellen kompiliert wird.

2. Verfahren nach Anspruch 1, **dadurch gekennzeichnet, dass** durch die im Wege der selektiven Auswahl eines Teilnetzwerkes als Makrobaustein aufgetrennten Strukturen eine Makroschnittstelle definieren.

3. Verfahren nach Anspruch 2, **dadurch gekennzeichnet, dass** jeder Makroschnittstelle jeweils ein eigener Lokalspeicher zur Speicherung von Makroschnittstellendaten zugewiesen wird.

4. Verfahren nach einem der Ansprüche 1 bis 3, **dadurch gekennzeichnet, dass** mittels des Makrobausteineditors der oder die Makrobaustein/e in Form einer Bearbeitung des ausgewählten Netzwerkes und/oder der jeweiligen Makroschnittstelle mittels vorbestimmbarer, bedarfsweise auswählbarer Programmiersprachen bearbeitet werden.

5. Verfahren nach einem der vorhergehenden Ansprüche, **dadurch gekennzeichnet, dass** innerhalb des Makrobausteins Programmsprünge durch eine Definition von Sprungzielbezeichnern angelegt werden.

6. Verfahren nach Anspruch 5, **dadurch gekennzeichnet, dass** den Sprungzielbezeichnern ein Ersetzungstool zugeordnet wird, das bei der Definition und/oder Generierung von relativen Sprüngen innerhalb des Makrobausteins die Anwahl von Sprungzielen außerhalb des jeweiligen Makrobausteins wirksam verhindert.

7. Verfahren nach einem der vorhergehenden Ansprüche, **dadurch gekennzeichnet, dass** innerhalb des Makrobausteins lokale und/oder globale Platzhalter vergeben werden.

8. Verfahren nach einem der vorhergehenden Ansprüche, **dadurch gekennzeichnet, dass** die in Form von Makrobausteinen mit unveränderter Makroschnittstelle gespeicherten Teilnetzwerke unmittelbar nach vorheriger Übersetzung sämtlicher diesen Makrobaustein verwendenden Bausteine und die in Form von Makrobausteinen mit veränderter Makroschnittstelle gespeicherten Teilnetzwerke nach Bearbeitung der veränderten Schnittstellen und vorheriger Übersetzung sämtlicher diesen Makrobaustein verwendenden Bausteine einsetzbar sind.

9. Verwendung des Verfahrens nach einem der Ansprüche 1 bis 8 zur Erzeugung eines Makrobausteins, um zur Steuerung und/oder Regelung eines technischen Prozesses zusätzliche Elemente, wie etwa ein Toggle-Flip-Flop (10), innerhalb der jeweils verwendeten graphischen Programmiersprache bereitzustellen.

## Claims

1. Method for open-loop and/or closed-loop control of a technical process in which by means of a program logic generated in a graphic programming language, preferably logic diagram (FUP) and/or ladder diagram (KOP), a sensory mechanism and/or actuator of this technical process is conducted in such a way that for processing repetitive process sequences program components which can be called according to need can be defined, wherein for this the following steps are processed:
- selection of a program sequence represented as a partial network and
- definition of this program sequence as a macro component,
**characterised in that**
- after selection of the partial network a macro component editor can be called to edit the macro component and
- the macro component is compiled in the event of use only at the respective calling points.

2. Method according to claim 1, **characterised in that** a macro interface is defined by the structures divided up by way of selective choice of a partial network as macro component.

3. Method according to claim 2, **characterised in that** each macro interface is allocated in each case its own local memory for storing macro interface data.

4. Method according to one of claims 1 to 3, **characterised in that** by means of the macro component editor the macro component(s) is/are edited in the form of editing of the selected network and/or the respective macro interface by means of predeterminable programming languages, selectable as required.

5. Method according to one of the preceding claims, **characterised in that** within the macro component program jumps are created by a definition of jump destination identifiers.

6. Method according to claim 5, **characterised in that** the jump destination identifiers are allocated a replacement tool which effectively prevents the selection of jump destinations outside the respective macro component during the definition and/or generation of relative jumps within the macro component.

7. Method according to one of the preceding claims, **characterised in that** within the macro component local and/or global wildcard symbols are issued.

8. Method according to one of the preceding claims, **characterised in that** the partial networks stored in the form of macro components with unchanged macro interface can be used immediately after prior translation of all the components using this macro component and the partial networks stored in the form of macro components with changed macro interface can be used after editing of the changed interfaces and prior translation of all the components using this macro component.

9. Use of the method according to one of claims 1 to 8 for generating a macro component in order to provide additional elements for open-loop and/or closed-loop control of a technical process, such as, for instance, a toggle flip-flop (10) within the graphic programming language used in each case.

## Revendications

1. Procédé de commande et/ou de régulation d'un processus technique dans lequel on commande au moyen d'une logique programmée produite dans un langage de programmation graphique, de préférence plan de fonctions (FUP) et/ou plan de contacts (KOP), un ensemble de capteurs et/ou d'actionneurs de ce processus technique de telle sorte que des modules de programme appelables si nécessaire sont définissables pour le traitement de séquences de processus qui se répètent, les étapes suivantes étant réalisées à cet effet :
- sélection d'une séquence de programme représentée sous forme de sous-réseau et
- définition de cette séquence de programme comme module macro,
**caractérisé par le fait que**
- après la sélection du sous-réseau, un éditeur de macro peut être appelé afin de travailler sur le module macro, et
- le module macro n'est compilé en cas d'utilisation qu'aux points d'appel respectifs.

2. Procédé selon la revendication 1, **caractérisé par le fait qu'**une interface de macro est définie par l'ensemble des structures séparées au cours de la sélection d'un sous-réseau comme module macro.

3. Procédé selon la revendication 2, **caractérisé par le fait qu'**on attribue à chaque interface de macro une mémoire locale particulière pour mémoriser des données d'interface de macro.

4. Procédé selon l'une des revendications 1 à 3, **caractérisé par le fait qu'**on travaille au moyen de l'éditeur de module macro sur le ou les modules macros en travaillant sur le réseau sélectionné et/ou sur l'interface de macro respective au moyen de langages de programmation pouvant être prescrits et pouvant être sélectionnés selon les besoins.

5. Procédé selon l'une des revendications précédentes, **caractérisé par le fait qu'**on place des sauts de programme à l'intérieur du module macro en définissant des indicateurs de destination de saut.

6. Procédé selon la revendication 5, **caractérisé par le fait qu'**on associe aux indicateurs de destination de saut un outil de remplacement qui, lors de la définition et/ou de la production de sauts relatifs à l'intérieur du module macro, empêche efficacement le choix de destinations de saut à l'extérieur du module macro respectif.

7. Procédé selon l'une des revendications précédentes, **caractérisé par le fait que**, à l'intérieur du module macro, on prescrit des réserves de place locales et/ou globales.

8. Procédé selon l'une des revendications précédentes, **caractérisé par le fait que** les sous-réseaux mémorisés sous forme de modules macros avec interface de macro non modifiée sont utilisables directement après l'interprétation antérieure de tous les modules utilisant ce module macro et que les sous-réseaux mémorisés sous forme de modules macros avec interface de macro modifiée sont utilisables après la révision des interfaces modifiées et après l'interprétation antérieure de tous les modules utilisant ce module macro.

9. Utilisation du procédé selon l'une des revendications 1 à 8 pour produire un module macro afin de mettre à disposition des éléments supplémentaires, par exemple une bascule bistable aussi appelée Toggle-Flip-Flop (10), à l'intérieur du langage de programmation graphique respectivement utilisé en vue de la commande et/ou de la régulation d'un processus technique.
